# EUROPÄISCHE PATENTSCHRIFT

(11) **EP 2 074 166 B1**
(45) Veröffentlichungstag und Bekanntmachung des Hinweises auf die Patenterteilung: **24.02.2010**
(21) Anmeldenummer: 08786480.7
(22) Anmeldetag: 25.07.2008
(51) Int. Cl.: C08K 5/00, C08K 5/3492, C08K 3/32, C08K 3/38, C08K 3/00

(54) **HALOGENFREIES FLAMMSCHUTZMITTEL**
HALOGEN-FREE FLAME-PROOFING AGENT
AGENT IGNIFUGE SANS HALOGÈNE

(30) Priorität: 28.07.2007 DE 102007035417
(43) Veröffentlichungstag der Anmeldung: 01.07.2009
(73) Patentinhaber: Chemische Fabrik Budenheim KG, 55257 Budenheim (DE)
(72) Erfinder: FUTTERER, Thomas, 55218 Ingelheim (DE); NÄGERL, Hans-Dieter, 67373 Dudenhofen (DE); FIBLA, Vincens Mans, E-08915 Badalona (ES); MENGEL, Siegfried, 55257 Budenheim (DE)
(74) Vertreter: Weber, Roland
(86) Internationale Anmeldenummer: PCT/EP2008/059830
(87) Internationale Veröffentlichungsnummer: WO 2009/016130

(56) Entgegenhaltungen:
- DE-A1- 4 003 231
- US-A- 4 966 931
- US-A1- 2002 010 235
- US-B1- 6 753 363
- DATABASE WPI Week 199751 Thomson Scientific, London, GB; AN 1997-554741 XP002498596 -& JP 09 268236 A (CHISSO CORP) 14. Oktober 1997 (1997-10-14)

## Beschreibung

### Gegenstand der Erfindung

Die Erfindung betrifft ein halogenfreies Flammschutzmittel zur Einbettung in eine Polymermatrix sowie das erfindungsgemäße Flammschutzmittel enthaltende Polymere, insbesondere thermoplastische Elastomere.

### Hintergrund der Erfindung

Thermoplastische Polymere, einschließlich thermoplastischer Elastomere, werden in zahlreichen Bereichen eingesetzt, beispielsweise im Elektrik- und Elektronikbereich, im Baubereich, in der Gebäudetechnik, beim KFZ-Bau und in öffentlichen Transportmitteln. Sie haben vorteilhafte mechanische Eigenschaften und besitzen gute Verarbeitbarkeit und chemische Beständigkeit. Eine Möglichkeit, derartige Polymere flammfest zu machen, ist der Zusatz halogenhaltiger Flammschutzmittel mit Antimontrioxid. Eine weitere Möglichkeit ist die Zugabe von halogenfreien Substanzen, wie Metallhydroxiden, organischen oder anorganischen Phosphaten oder Phosphonaten, beispielsweise Ammoniumpolyphosphaten zusammen mit synergistisch wirkenden Substanzen, wie Kohlenstofflieferanten und Treibmitteln.

Insbesondere die halogenfreien Flammschutzmittel gewinnen zunehmend an Bedeutung, da sie im Gegensatz zu Flammschutzmitteln, die chlorierte oder bromierte organische Verbindungen enthalten, im Brandfall eine geringere Rauchgasentwicklung bewirken und in der Regel als umweltfreundlich eingestuft werden. Unter den brandhemmenden Substanzen werden vor allem Derivate der Phosphorsäure, der Pyrophosphorsäure und der Polyphosphorsäuren in halogenfreien Flammschutzmitteln eingesetzt. Ammonium- und Melaminderivate der vorgenannten Substanzen sowie Piperazinphosphat und Ethylendiaminphosphat besitzen die Eigenschaft, sich bei hohen Temperaturen eingebettet in Formmassen zu voluminösen Schutzschichten aufzublähen und als Isolierschicht gegen eine Hitzequelle zu wirken. Diese Eigenschaft kann durch synergistisch wirkende Substanzen noch verstärkt werden. Das Aufblähen, die sogenannte Intumeszenz, verläuft im Gegensatz zur Wirkungsweise von halogenhaltigen Flammschutzmitteln ohne Entwicklung größerer Mengen an Rauchgasen.

Der Einsatz der oben genannten Flammschutzmittel in Polyolefinen verleiht häufig keinen ausreichenden Schutz und es müssen zusätzlich synergistisch wirkende Substanzen, wie z.B. Kohlenstofflieferanten und Blähmittel, hinzugefügt werden. Um eine ausreichende Wirksamkeit derartiger Flammschutzmittelzusammensetzungen zu gewährleisten, muss dabei häufig dem Polymer ein sehr hoher Anteil an Flammschutzmittel zugegeben werden, was zu einer Veränderung insbesondere der mechanischen und elektrischen Eigenschaften des Polymers führt.

Bisher gehören zu den besonders wirksamen Flammschutzmitteln Mischungen aus Ammoniumpolyphosphat mit Aminen, wie z.B. Mischungen mit Melaminverbindungen und/oder Pentaerythrit. Weitere bekannte intumeszierende Mischungen basieren auf Ammoniumpolyphosphaten in Kombination mit THEIC (1,3,5-Tris-hydroxyethylisocyanursäure).

Der Nachteil dieser Mischungen besteht jedoch darin, daß sie auch nach dem Einbringen in ein Polymer eine sehr hohe Wasserlöslichkeit aufweisen, so daß sie teilweise ausgewaschen werden und ihre Wirkung demzufolge nicht mehr entfalten können. Weiterhin haben sie eine niedrige Zersetzungstemperatur, die teilweise bereits beim Formen der Kunststoffgegenstände aus den zu schützenden Polymeren zu einer Zersetzung des Flammschutzzusatzes führt. Weiterhin müssen diese Mischungen trotz verbesserter Wirksamkeit in hohen Konzentrationen in einem Polymer eingesetzt werden, wodurch die Verarbeitbarkeit und Flexibilität des Polymers herabgesetzt wird.

### Aufgabe der Erfindung

Vor diesem Hintergrund bestand die Aufgabe der Erfindung darin, ein halogenfreies Flammschutzmittel zur Verfügung zu stellen, das gegenüber dem Stand der Technik verbesserte flammwidrige Wirkung besitzt, in geringeren Konzentrationen in einem Polymermaterial bei gleichzeitig guter flammwidriger Wirkung einsetzbar ist, eine geringe Wasserlöslichkeit aufweist und sich erst bei höheren Temperaturen als bekannte Flammschutzmittel, vorzugsweise oberhalb der Verarbeitungstemperatur der Polymere, zersetzt. Weiterhin war es Aufgabe der Erfindung, ein Polymermaterial, insbesondere ein thermoplastisches und elastomeres Polymermaterial zu Verfügung zu stellen, welches gute Materialeigenschaften, gute Flammbeständigkeit und gleichzeitig eine gute Wasserbeständigkeit aufweist.

### Beschreibung der Erfindung

Erfindungsgemäß wird die Aufgabe durch ein halogenfreies Flammschutzmittel gelöst, welches wenigstens die folgenden Komponenten A, B und C und optional die Komponente D enthält:
A: Ammoniumpolyphosphat(e) und/oder Derivate davon,
B: oligomeres oder polymeres 1,3,5-Triazinderivat oder Gemische von mehreren davon der allgemeinen Formel 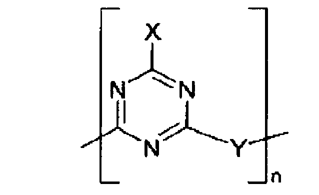 wobei
   X ein Morpholino-Rest, ein Piperidino-Rest oder eine von Piperazin abgeleitete Gruppe ist,
   Y eine zweiwertige, von Piperazin abgeleitete Gruppe ist und
   n eine ganze Zahl größer als 1 ist,
C: Verbindungen, ausgewählt unter Monozinkphosphat, Zinkborat, Trizinkphosphat, Zinkpyrophosphat, Zinkpolyphosphat, Zinkhydroxystannat, Zinkstannat, Borphosphat, Monoaluminiumphosphat, Trialuminiumphosphat, Aluminiummetaphosphat und Gemischen davon,
D: vorkondensierte Melaminderivate, Melaminsalze und -addukte, Ethylendiaminphosphat, Piperazinphosphat, Piperazinpolyphosphat, 1,3,5-Trihydroxyethylisocyanurat, 1,3,5-Triglycidylisocyanurat, Triallylisocyanurat,
wobei das Gewichtsverhältnis der Komponente A zu der Komponente B von 10:1 bis 1:1 beträgt und die Komponenten A und B zusammen 60 bis 99 Gew.-% und die Komponenten C und D zusammen 1 bis 40 Gew.-% des Gesamtgewichts der Komponenten A, B, C und D ausmachen.

Des weiteren wird die Aufgabe durch ein Polymer, insbesondere ein thermoplastisches Elastomer, gelöst, welches das erfindungsgemäße Flammschutzmittel in einer Menge von 5 bis 60 Gew.-%, vorzugsweise in einer Menge von 10 bis 40 Gew.-% enthält.

Komponente A umfaßt sowohl beschichtete(s) als auch unbeschichtete(s) Ammoniumpolyphosphat(e) und/oder Derivate davon.

Dabei umfaßt der Begriff "beschichtete Ammoniumpolyphosphate" sowohl einfach beschichtetes Ammoniumpolyphosphat als auch beschichtetes und vernetztes Ammoniumpolyphosphat. Eine derartige Beschichtung bewirkt bei Zugabe des Flammschutzmittels zu einem Polymer, daß im Gegensatz zu unbeschichtetem Ammoniumpolyphosphat eine erhöhte thermische Stabilität, eine geringere Wasserlöslichkeit sowie eine verbesserte Kompatibilität zu der Polymermatrix erreicht wird, in der das Flammschutzmittel eingesetzt wird. Die beschichtete Form der Komponente A ist durch Beschichtung eines Pulvers oder Granulats von Ammoniumpolyphosphat oder einem Derivat davon erhältlich.

Die Komponente A wird dem Flammschutzmittel als Pulver oder Granulat zugefügt und verursacht im Brandfall deutlich weniger Rauchgase als halogenhaltige Flammschutzmittel.

Komponente B ist ein Oligomer oder Polymer eines 1,3,5-Triazinderivates oder ein Gemisch mehrerer davon und eine in Kombination mit Phosphaten ebenfalls flammwidrig wirkende Substanz. Komponente B wird durch hohe Hitzeeinwirkung oder Kontakt mit einer Flamme unter Erzeugung von nicht entflammbaren Gasen, einschließlich Wasser, Kohlenstoffdioxid, Ammoniak und Stickstoff, unter Bildung eines kohlenstoffhaltigen Restes zersetzt. Die Komponente B wirkt als Kohlenstofflieferant in der erfindungsgemäßen intumeszierenden Mischung.

Das Gewichtsverhältnis der Komponenten A und B von 10:1 bis 1:1 bewirkt eine optimale flammwidrige Wirkung. Ein geringerer oder höherer Anteil der Komponente B würde die Wirksamkeit des Flammschutzmittels herabsetzten. Bevorzugt beträgt in diesem Zusammenhang das Gewichtsverhältnis der Komponente A zu der Komponente B von 6:1 bis 2:1 und besonders bevorzugt von 5:1 bis 3:1. Weiterhin bevorzugt ist es, wenn die Komponenten A und B zusammen von 85 bis 99 Gew.-% und besonders bevorzugt von 90 bis 95 Gew.-% und die Komponenten C und D zusammen bevorzugt von 1 bis 15 Gew.-% und besonders bevorzugt von 5 bis 10 Gew.-% des Gesamtgewichts der Komponenten A, B, C und D ausmachen.

Komponente C enthält Stoffe, insbesondere Salze, die in dem erfindungsgemäßen Flammschutzmittel eine weitere Reduzierung der Rauchgasentwicklung bewirken. Dadurch wird die durch Rauchgas vermittelte Toxizität bei Bränden deutlich reduziert und gleichzeitig die Wirkung des Flammschutzmittels verbessert. Diese Komponente bewirkt überdies eine höhere Effizienz des Flammschutzmittels und verbesserte mechanische Eigenschaften des Polymers, in dem das Flammschutzmittel eingesetzt wird.

Komponente D enthält vorkondensierte Melaminderivate und/oder Melaminsalze und -addukte, Ethylendiaminphosphat, Piperazinphosphat, Piperazinpolyphosphat, 1,3,5-Trihydroxyethylisocyanurat, 1,3,5-Triglycidylisocyanurat, Triallylisocyanurat oder Gemische davon. Beispiele für vorkondensierte Melaminderivate sind Melem, Melon, Melam, Melamincyanurat, Melaminborat, Melaminorthophosphat, Melaminpyrophosphat, Dimelaminpyrophosphat und Melaminpolyphosphat.

Die Verbindungen der Komponente D wirken als Treibmittel. Die vorkondensierten Melaminderivate und/oder Melaminsalze und -addukte sind so stabil, daß während der Verarbeitung eines Kunststoffs, der das Flammschutzmittel enthält, eine Kondensationsreaktion oder Zersetzungsreaktion nicht stattfindet und dadurch die Verarbeitbarkeit des Kunststoffs erheblich verbessert wird. Gleichzeitig bleibt die flammwidrige Wirkung erhalten.

Die Verbindungen der Komponente D besitzen eine mit Ammoniumpolyphosphat vergleichbare oder höhere Zersetzungstemperatur und unterstützen daher die Wirksamkeit des Ammoniumpolyphosphats oder seiner Derivate. Beim Einsatz in einem Kunststoff bleiben dessen Stabilität, Verarbeitbarkeit und mechanische Belastbarkeit erhalten.

Die genannten Bestandteile des erfindungsgemäßen Flammschutzmittels tragen in der erfindungsgemäßen Zusammensetzung auch zur Verbesserung der mechanischen Eigenschaften eines Polymers bei, in welchem das Flammschutzmittel eingesetzt wird.

Ein weiterer Vorteil des erfindungsgemäßen Flammschutzmittels ist, daß es im Vergleich zu herkömmlichen Flammschutzmitteln bei gleich guter oder besserer Wirkung in geringeren Mengen eingesetzt werden kann und dadurch auch die Kosten eines derart ausgerüsteten Kunststoffs reduziert und dessen mechanische Eigenschaften weniger stark beeinflußt bzw. beeinträchtigt werden. Die erfindungsgemäßen Flammschutzmittel erzielen auch in einer Konzentration von weniger als 30% in einem dünnschichtigen Kunststoff, z.B. HDPE (High-Density-Polyethylen), eine sehr gute Flammschutzwirkung. Bei Einsatz des erfindungsgemäßen Flammschutzmittels in Polypropylenen (PP) können bereits Konzentrationen von weniger als 25% oder sogar weniger als 20% des Flammschutzmittels in dem Kunststoff für eine gute Flammschutzwirkung ausreichen, ohne daß die Verarbeitbarkeit beeinträchtigt wird.

Bevorzugt ist oder umfaßt die Komponente A beschichtete(s) Ammoniumpolyphosphat(e) und/oder Derivate davon. Die Beschichtung der Komponente A bewirkt nicht nur eine starke Reduzierung der Wasserlöslichkeit, sondern auch eine erhöhte Temperaturstabilität des Ammoniumpolyphosphats, eine reduziertere Aktivität des Ammoniumpolyphosphats mit anderen Komponenten des Flammschutzmittels sowie eine erhöhte Kompatibilität mit dem Polymer, in welchem das Flammschutzmittel eingesetzt wird.

Gemäß einer Ausführungsform ist in dem erfindungsgemäßen Flammschutzmittel die Komponente A unter beschichteten Ammoniumpolyphosphaten der Kristallformen I, II oder V oder Gemischen davon ausgewählt.

Besonders bevorzugt umfaßt Komponente A beschichtetes und/oder unbeschichtetes Ammoniumpolyphosphat der Kristallform II, welche im Vergleich zu den anderen Kristallformen nahezu unlöslich in Wasser ist. Es handelt sich dabei um eine pulverförmige Substanz, die bereits ohne Beschichtung eine gute flammwidrige Wirkung bei gleichzeitig geringer Wasserlöslichkeit aufweist. Der Vorteil der Verwendung von beschichtetem Ammoniumpolyphosphat der Kristallform II besteht darin, daß dieses eine höhere thermische Stabilität und höhere Kompatibilität mit Polymeren aufweist, so daß dadurch eine verbesserte Dispergierung des Flammschutzmittels in dem Polymer, ein verbessertes Verarbeitungsprofil des Polymers und ein effizienterer Brandschutz erzielt wird.

Vorzugsweise wird/werden dabei das Ammoniumpolyphosphat und/oder Derivate davon mit Melamin, Melaminharz, Melaminderivaten, Silanen, Siloxanen oder Polystyrolen beschichtet. Es bildet sich eine ionische Bindung zwischen dem partikelförmigen Ammoniumpolyphosphat und/oder Derivat davon und dem Beschichtungsmaterial, wobei an das Ammoniumpolyphosphat gebundener Ammoniak durch das Beschichtungsmaterial ersetzt wird. Diese Verbindung ist sehr stabil, so daß bei der Verarbeitung des Kunststoffs die Beschichtung weitgehend beständig ist.

Die Herstellung von mit Melamin beschichtetem Ammoniumpolyphosphat erfolgt bei Temperaturen von mehr als 250 °C. Dabei wird die Reaktionszeit so bemessen, daß eventuell überschüssiges Melamin vollständig mit der Oberfläche des Ammoniumpolyphosphates abreagiert, dabei Ammoniak ersetzt und besser gebunden wird.

Weiterhin bevorzugt ist eine Beschichtung der Ammoniumpolyphosphatpartikel mit Melamin, Melaminharz, Melminderivaten, Silanen, Siloxanen oder Polystoyrolen und anschließende Vernetzung. Die Vernetzung der Melaminbeschichtung bewirkt eine weitere Reduzierung der Wasserlöslichkeit des Ammoniumpolyphosphats und wird in der Regel mit Formaldehyd durchgeführt. Das Verfahren ist dem Fachmann bekannt.

Bevorzugt beträgt der Anteil der Beschichtung der Ammoniumpolyphosphate und/oder der Derivate davon 0,1 bis 20 Gew.-%, bevorzugt 1 bis 10 Gew.-%, bezogen auf das Gesamtgewicht der beschichteten Ammoniumpolyphosphate und/oder der Derivate davon. Bei einem derartigen Verhältnis von Ammoniumpolyphosphat zu Beschichtung ist ein optimaler Schutz des Ammoniumpolyphosphats gewährleistet, der auch zu einer optimalen Verbindbarkeit des Ammoniumpolyphosphats mit einem Polymer, in welchem das Flammschutzmittel eingesetzt werden soll, führt. Gleichzeitig ist bei diesem Verhältnis die Beschichtung nicht in einem solchen Überschuß vorhanden, daß ein Ablösen von freiem Beschichtungsmaterial, das weniger stark an Ammoniumpolyphosphat gebunden ist, auftritt.

Besonders bevorzugt beträgt die mittlere Teilchengröße D50 der beschichteten Partikel aus Ammoniumpolyphosphat oder einem Derivat davon von 5 µm bis 30 µm, insbesondere von 5 µm bis 20 µm, besonders bevorzugt zwischen 7 µm und 18 µm, einschließlich der Beschichtung. Größere Teilchen ließen sich nicht ausreichend homogen in einem Polymer dispergieren und würden dadurch dessen Eigenschaften unter Umständen negativ beeinflussen. Kleinere Teilchen sind ebenfalls weniger bevorzugt, da sie nur schlecht dosierbar sind.

Bei dem beschichteten Ammoniumpolyphosphat und/oder Derivat davon beträgt die mittlere Teilchengröße D50 der Partikel aus Ammoniumpolyphosphat und/oder der Derivate davon als Kern der beschichteten Partikel vorzugsweise etwa 7 µm. Dadurch wird insbesondere auch erreicht, daß die erfindungsgemäßen Flammschutzmittel im Vergleich zu bisher bekannten Flammschutzmitteln hohe Zersetzungstemperaturen und damit eine sehr hohe Temperaturstabilität aufweisen.

Vorzugsweise wird als Komponente B ein oligomeres oder polymeres 1,3,5-Triazinderivat eingesetzt, bei dem n eine ganze Zahl von 2 bis 50, besonders bevorzugt von 2 bis 30, und insbesondere bevorzugt von 3 bis 9 ist. Bei der Herstellung derartiger Oligomere oder Polymere entstehen üblicherweise Mischungen mit unterschiedlichen Kettenlängen. Auch solche bei der Polymerisation entstehenden Mischungen können eingesetzt werden, wobei mehr als 70%, vorzugsweise mehr als 80%, und besonders bevorzugt mehr als 90% der eingesetzten Oligomere und Polymere eine Kettenlänge von n = 2 bis 50, vorzugsweise von n = 2 bis 30 und besonders bevorzugt von n = 3 bis 9 aufweisen. Es können dabei sowohl Heteropolymere als auch Homopolymere eingesetzt werden.

Bevorzugte Monomere des 1,3,5-Triazinderivats gemäß Komponente B sind 2-Piperazinylen-4-morpholino-1,3,5-Triazin und 2-Piperazinylen-4-piperidino-1,3,5-Triazin. Es können auch gemischte Oligomere oder Polymere der oben genannten Substanzen eingesetzt werden. Der synergistische Effekt der genannten Polymere oder Oligomere mit beschichtetem Ammoniumpolyphosphat und/oder Derivaten davon bewirkt insbesondere eine Steigerung der Effizienz des Flammschutzmittels.

Verbindungen gemäß Komponente C, die die Wirksamkeit des Flammschutzmittels weiter verbessern und insbesondere eine geringe Zugabemenge des Flammschutzmittels ermöglichen, sind Metallsalze, ausgewählt unter Monozinkphosphat Zn(H₂PO₄)₂ Zinkborat, Trizinkphosphat Zn₃(PO₄)₂, Zinkpyrophosphat Zn₂P₂O₇ Zinkpolyphosphat der allgemeinen Formel oZnO pP₂O₃ qH₂O, wobei o und p von 1 bis 7 betragen und q von 0 bis 7 beträgt, Zinkhydroxystannat ZnSn(OH)₆, Zinkstannat ZnSnO₃, Borphosphat BPO₄, Monoaluminiumphosphat Al(H₂PO₄)₃, Trialuminiumphosphat AlPO₄, Aluminiummetaphosphat [Al(PO₃)₃]ₙ, Ammoniumoctamolybdat (AOM) und Gemischen davon. Bei diesen Salzen hat sich überraschenderweise gezeigt, daß durch die Wechselwirkung mit den Komponenten A und B eine hervorragende Wirkung des Flammschutzmittels erzielt wird, die auch bei einer geringen Zugabemenge in Polymeren zu einer Klassifizierung in der höchsten Brandschutzklasse führt.

Unter den vorkondensierten Melaminderivaten, Melaminsalzen und Melaminaddukten der Komponente D sind Melem, Melon, Melam bevorzugt. Weitere bevorzugte Verbindungen der Komponente D sind Melamincyanurat, Melaminborat, Melaminorthophosphat, Melaminpyrophosphat, Dimelaminpyrophosphat und Melaminpolyphosphat. Der Zusatz dieser Substanzen bewirkt eine weitere Verbesserung des Flammschutzmittels, wobei diese Substanzen auch in geringen Mengen als Treibmittel wirken.

Die Erfindung umfaßt auch ein Polymermaterial, insbesondere ein thermoplastisches Elastomer, welches das erfindungsgemäße Flammschutzmittel vorzugsweise in einer Menge von 5 bis 60 Gew.-%, besonders bevorzugt in einer Menge von 10 bis 40 Gew.-% enthält. Derart flammgeschützte Polymere erfüllen auch bei geringen Schichtdicken von z. B. nur 0,8 mm höchste Brandschutzanforderungen selbst bei hoch entflammbaren Kunststoffen wie PP oder HDPE und anderen leicht entzündlichen Copolymeren. Dabei werden durch das erfindungsgemäße Flammschutzmittel gegenüber bekannten mit Flammschutzmitteln ausgerüsteten Kunststoffen die Flexibilität und Verarbeitbarkeit der flammwidrig ausgerüsteten Kunststoffe verbessert.

Bevorzugte Polymermaterialien sind ausgewählt unter gefüllten und ungefüllten Polyolefinen, Vinyl-Polymeren, Olefin-Copolymeren, thermoplastischen Elastomeren auf Olefinbasis (TPO), vernetzten thermoplastischen Elastomeren auf Olefinbasis, Urethanen (TPU), Polyestern und Copolyestern (TPC), Styrol-Blockcopolymeren (TPS), Polyamiden und Copolyamiden (TPA). Insbesondere werden bei Verwendung des erfindungsgemäßen Flammschutzmittels mit thermoplastischen Elastomeren auf Olefinbasis, vernetzten thermoplastischen Elastomeren auf Olefinbasis und Styrol-Blockcopolymeren die mechanischen Eigenschaften der Kunststoffe, insbesondere die Abriebfestigkeit in günstiger Art und Weise beeinflußt. Daher können derartige flammwidrig ausgerüstete thermoplastische Elastomere insbesondere als Ersatz von PVC in Kabeln, Leitungssystemen, Röhren für elektrische Kabel und Rohrleitungen von Abwassersystemen eingesetzt werden. Besonders bevorzugt ist das erfindungsgemäße thermoplastische Elastomer unter Styrol-Blockcopolymeren (TPS), vorzugsweise unter den Styrol-Blockcopolymeren SBS (Styrol-Butadien-Styrol), SEBS (Styrol-Ethenbuten-Styrol), SEPS (Styrol-Ethenpropen-Styrol), SEEPS (Styrol-Ethen-Ethenpropen -Styrol)und MBS (Methacrylat-Butadien-Styrol) ausgewählt.

Thermoplastische Elastomere, insbesondere Styrol-Blockcopolymere, sind verhältnismäßig leicht entflammbar, in der Regel leichter als viele andere Polymerarten, unter anderem weil sie einen hohen Anteil an Ölen enthalten, die die Entflammbarkeit verstärken. Es war daher besonders überraschend, dass thermoplastische Elastomere überhaupt und insbesondere mit den erfindungsgemäßen Flammschutzmitteln derart effektiv flammgeschützt werden konnten, wie dies erfindungsgemäß erreicht wird. Der zum Erreichen einer guten Flammschutzwirkung notwendige Anteil an Flammschutzmittel in der Polymermatrix ist zwar in der Regel etwas höher als bei einigen anderen Polymerarten, jedoch beeinflußt dieser höhere Anteil an Flammschutzmitteln bei sehr vielen Arten thermoplastischer Elastomere die mechanischen und sonstigen Eigenschaften nicht wesentlich zum Nachteil.

Weiterhin bevorzugt enthält das Polymermaterial neben dem erfindungsgemäßen Flammschutzmittel weitere Füllstoffe, die unter Calciumcarbonat, Silicaten, wie Talk, Ton oder Glimmer, Kieselerde, Calcium- und Bariumsulfat, Aluminiumhydroxid, Glasfasern und Glaskugeln sowie Holzmehl, Cellulosepulver und Rußen und Graphiten ausgewählt sind. Diese Füllstoffe können weitere gewünschte Eigenschaften der Kunststoffe bewirken. Insbesondere kann dadurch der Preis des Kunststoffs herabgesetzt werden, der Kunststoff gefärbt werden oder gewünschte mechanische Eigenschaften des Kunststoffs verbessert werden, z.B. durch eine Verstärkung mit Glasfasern.

In einer weiteren Ausführungsform der Erfindung weist in dem halogenfreien Flammschutzmittel die Komponente B einen Chlorgehalt von < 1 Gew.-%, vorzugsweise < 0,8 Gew.-% auf. Dies ist besonders vorteilhaft gegenüber dem Stand der Technik, da bei bekannten Flammschutzmitteln unerwünscht viel Chlor in Form von anorganisch und organisch gebundenem Chlor eingebracht wird.

In einer weiteren Ausführungsform der Erfindung wiest das Polymermaterial insgesamt einen Chlorgehalt von < 1500 Gew.-ppm, vorzugsweise < 900 Gew.-ppm auf. Dies ist besonders vorteilhaft gegenüber dem Stand der Technik, da bei bekannten Flammschutzmitteln unerwünscht viel Chlor in Form von anorganisch und organisch gebundenem Chlor eingebracht wurde. Der begriff "halogenfrei" im Sinne der Erfindung erlaubt geringe Verunreinigungen an Chlor in den vorgenannten Höchstmengen. Chlor bzw. Halogen allgemein soll aber generell gering gehalten werden, um die Nachteiligen Auswirkungen der Halogene zu vermeiden.

In einer weiteren Ausführungsform der Erfindung sind in dem halogenfreien Flammschutzmittel Dispergierhilfsmittel in einer Menge von 0,01 bis 10 Gew.-%, vorzugsweise in einer Menge von 0,1 bis 5, 0 Gew.-% enthalten sind, wobei die Dispergierhilfsmittel vorzugsweise unter.Fettsäureamiden, einschließlich Fettsäuremonoamiden, Fettsäurebisamiden und Fettsäurealkanolamiden, wie Oleamiden und Erucamiden, unter Fettsäureestern, einschließlich Glycerolestern und Waxestern, unter C16- bis C18-Fettsäuren, unter Fettsäurealkoholen, einschließlich Cetyl- und Stearyl-Fettsäurealkoholen, unter natürlichen und synthetischen Waxen, Polyethylenwaxen und oxidierten Polyethylenwaxen und unter Metallstearaten, vorzugsweise Ca-, Zn-, Mg-, Ba-, Al-, Cd- und Pb-Stearaten, ausgewählt sind. Die Zugabe der vorgenannten Dispergierhilfsmittel verbessert die Dosierbarbarkeit des Flammschutzmittels, die Extrudierbarkeit des Polymermaterial und die Homogenität des dispergierten Flammschutzmittels innerhalb der Polymermatrix.

In einer weiteren Ausführungsform der Erfindung weist das halogenfreie Flammschutzmittel einen Gehalt an freiem Wasser (Feuchtegehalt) von < 0,6 Gew.-%, vorzugsweise < 0,4 Gew.-% auf. Ein niedriger Wassergehalt verbessert ebenfalls die Dosierbarbarkeit des Flammschutzmittels, die Extrudierbarkeit des Polymermaterial und die Homogenität des dispergierten Flammschutzmittels innerhalb der Polymermatrix.

### Beispiele

Im folgenden werden einige Beispiele angeführt, die sowohl erfindungsgemäße als auch nicht erfindungsgemäße Polymere bzw. die darin eingesetzten Flammschutzmittel umfassen.

Für die Beispiele wurden Prüfkörper für verschiedene Untersuchungen in einem Brabender Kunststoffkneter hergestellt. Dazu wurde zunächst ein Polymer ohne Flammschutzmittelzusatz unter Bewegung aufgeschmolzen. Anschließend wurden die Komponenten A, B, C und/oder D in einem Schritt als Mischung oder nacheinander der Schmelze zugegeben. Nach einer Homogenisierungsphase von 10 bis 15 Minuten wurde das Kunststoffmaterial entnommen und mit Hilfe einer beheizbaren Presse zu Platten mit Dicken von 0,8 mm und 1,6 mm gepreßt. Die gepreßten Platten wurden mit Hilfe einer Säge zu geeigneten Prüfkörpern zurechtgeschnitten und den nachfolgend beschriebenen Tests unterzogen.

Die Zusammensetzung der unterschiedlichen Prüfkörper bzw. Vergleichsprüfkörper ist in Tabelle 1 angegeben. Das verwendete Triazinderivat ist ein Polymeres von 2-Piperazinylen-4-morpholino-1,3,5-Triazin. Weiterhin wurde ein unbeschichtetes Ammoniumpolyphosphat (FR CROS 484), ein mit Melamin beschichtetes Ammoniumpolyphosphat (FR CROS C40) oder ein mit Melamin beschichtetes und vernetztes Ammoniumpolyphosphat (FR CROS 498) eingesetzt (Hersteller jeweils Chemische Fabrik Budenheim). Als Melaminpolyphosphat wurden Budit 3141 (Hersteller: Budenheim Iberica) oder Melapur 200 (Hersteller CIBA) eingesetzt. Das verwendete Aluminiumphosphat ist Fabutit (Hersteller: Chemische Fabrik Budenheim), das Melamincyanurat ist als Budit 315 von Budenheim Iberica erhältlich. Die Abkürzung HDPE bedeutet High-Density-Polyethylen, PP bezeichnet Polypropylen.

Die nur durch eine Zahl und ohne V bezeichneten Beispiele sind erfindungsgemäße Beispiele. Die mit V und einer Zahl gekennzeichneten Beispiele sind nicht erfindungsgemäße Vergleichsbeispiele.

### UL94 Vertikal Test

Zur Durchführung des UL94 Vertikal Test, im nachfolgenden mit UL94 V bezeichnet, wurde je ein Set aus fünf Prüfkörpern mit einer Dicke von 1,6 mm bzw. 0,8 mm an einem Ende in einer vertikalen Position eingespannt. An das freie Ende des Prüfkörpers wurde zweimal für 10 s eine Bunsenbrennerflamme gehalten. Danach wurde jeweils die Zeit bis zum Erlöschen der Flamme oder des Glühens des Prüfkörpers gemessen. Gleichzeitig wurde festgestellt, ob entflammte Tropfen des Prüfkörpers darunterliegende Baumwolle entzünden konnten. Die Ergebnisse sind in Tabelle 2 wiedergegeben.

"TBT" bezeichnet jeweils die Summe der Brenndauern von insgesamt 5 Prüfkörpern in Sekunden.

Die Untersuchungen wurden gemäß den Vorgaben der Underwriter Laboratories, Standard UL 94V durchgeführt. "UL94" bezeichnet die Brandschutzeinstufung des Prüfkörpers, wobei V0 bedeutet, daß die Gesamtbrenndauer von 5 getesteten Prüfkörpern weniger als 50 Sekunden betrug und Baumwolle nicht durch herabtropfende glühende oder brennende Bestandteile des Prüfkörpers entzündet wurde. Die Einstufung V2 bedeutet, daß die Gesamtbrenndauer von 5 getesteten Prüfkörpern insgesamt weniger als 250 Sekunden betrug, ein Baumwolltuch jedoch durch herabtropfende Prüfkörperbestandteile entzündet wurde.

### LOI Test

Die kleinste Sauerstoffkonzentration in einer N₂/O₂ -Mischung, bei der eine Probe nach dem Anzünden gerade noch von allein weiter brennt, ist der LOI-Wert (Limiting Oxygen Index). Je höher der LOI-Wert, desto flammbeständiger ist die Probe. Dabei sind LOI-Werte über 30% sehr gut. Ein hoher LOI ist besonders wichtig bei der Einhaltung von Normen, die in der Kabelindustrie gefordert werden.

Die Untersuchung wurde gemäß DIN EN ISO 4589 Teil 2 durchgeführt. Die Prüfkörper hatten die Maße 1,25 mm x 3,0 x 6,5 mm.

Die Ergebnisse dieser Untersuchungen sind ebenfalls in Tabelle 2 aufgeführt, wobei jeweils der LOI in Prozent angegeben ist.

### Untersuchung der Zersetzungstemperatur des Flammschutzmittels

Als weiterer Test wurde das Flammschutzmittel selbst ohne Einarbeitung in ein Polymer erhitzt und dabei festgestellt, ab welcher Temperatur eine Zersetzung stattfindet. Üblicherweise wird die Zersetzungstemperatur als die Temperatur angegeben, bei der ein Gewichtsverlust von 2% eintritt.

Diese Untersuchungen wurden mit Hilfe der Thermogravimetrie durchgeführt. Dafür wurde jeweils eine Menge von 10 mg eines Flammschutzmittels in einen Tiegel gefüllt und bei einer Temperatursteigerung von 10 Kelvin/min auf Temperaturen über 350 °C erhitzt. Während des Erhitzens wurde die Gewichtsveränderung der Probe gemessen.

Die Ergebnisse dieser Untersuchungen sind in Tabelle 3 wiedergegeben.

Insgesamt wurden 14 verschiedene erfindungsgemäße Zusammensetzungen (Beispiele Nr. 1 bis 14) und vier Vergleichszusammensetzungen (Beispiele Nr. V1 bis V4) untersucht.

Insbesondere bei Prüfkörpern mit Schichtdicken von 0,8 mm wird deutlich, daß die erfindungsgemäßen Flammschutzmittel bzw. erfindungsgemäße Flammschutzmittel enthaltende Polymere eine deutliche Verbesserung im Vergleich zu ähnlichen bisher verwendeten Flammschutzmitteln erzielen. Erfindungsgemäße Polymere erreichen fast alle die höchste Brandklasse im UL94-Test von V0 bei einer Schichtdicke von 0,8 mm, während dies bei den Vergleichsbeispielen nicht der Fall ist.

Selbst bei einem Anteil von lediglich 20% des Flammschutzmittels in dem Kunststoff, wie das bei den Beispielen 3 und 4 der Fall ist, wird bei dem UL 94 Test immerhin noch eine Einstufung von V2 erreicht.

Insbesondere das Erreichen der höchsten Brandschutzklasse bei sehr geringen Schichtdicken und einem Anteil des Flammschutzmittels von weniger als 30% oder weniger als 25% und einer guten Brandschutzklassifizierung selbst bei weniger als 20% in einem Kunststoff, eröffnet die Möglichkeit, mit den hier beschriebenen Flammschutzmittelkombinationen auch Kunststoffe, insbesondere thermoplastische Polyolefine und Elastomere mit sehr geringen Schichtdicken flammfest auszurüsten und dadurch neue Anwendungsmöglichkeiten von halogenfreien intumeszierenden Flammschutzmitteln zu eröffnen. Dazu gehören Verkleidungen von Kabeln, Kabelkanäle, Folien, elektronische Bauteile, Gehäuse von elektrischen und elektronischen Geräten, etc. Bei der Herstellung solcher Materialien ist es weiterhin vorteilhaft, daß die erfindungsgemäßen Flammschutzmittel eine ausgezeichnete Wirkung bei den verwendeten Thermoplasten erzielen und dadurch die mechanischen Eigenschaften der so ausgerüsteten Polymere aufgrund der geringen Dosierung und der besonderen Zusammenwirkung der Komponenten A und B mit den Komponenten C und gegebenenfalls D erhalten bleiben. Die erfindungsgemäßen Flammschutzmittel zeichnen sich auch durch eine sehr geringe Rauchgasentwicklung aus.

Die Beispiele 5, 6, 7 und 8 zeigen insbesondere, daß durch die Zugabe von Komponente D zwar die gesamte Brenndauer geringfügig verlängert wird, im Gegenzug jedoch die Zersetzungstemperatur oder der Sauerstoffindex (LOI) ebenfalls erhöht wird, d. h. daß erst bei höheren Sauerstoffkonzentrationen ein Weiterbrennen des Prüfkörpers bzw. des erfindungsgemäßen Polymers möglich ist.

Dabei enthält Beispiel Nr. 5 insgesamt nur 25% des Flammschutzmittels, welches sich aus 76% mit Melamin beschichtetem Ammoniumpolyphosphat, 16% der Triazinverbindung und je 4% Zinkpyrophosphat und Melamincyanurat zusammensetzt. Diese Komponente hat besonders ausgewogene Eigenschaften, die eine gute flammwidrige Wirkung, einen sehr hohen Sauerstoffindex und eine ebenfalls sehr hohe Zersetzungstemperatur umfassen.

Der Zusatz der Komponente D ist, wie durch die Beispiele gezeigt wird, in der Lage, die Zersetzungstemperatur eines erfindungsgemäßen Flammschutzmittels nach oben zu setzen. Je nach Anwendung kann daher durch Zugabe oder Weglassen der Komponente D eine bestimmte gewünschte Eigenschaft verstärkt werden.

Alle erfindungsgemäßen Flammschutzmittel bzw. mit erfindungsgemäßen Flammschutzmitteln ausgerüstete Polymere und daher erfindungsgemäße Polymere haben sowohl eine kurze Brenndauer, als auch einen sehr hohen Sauerstoffindex und eine sehr hohe Zersetzungstemperatur. Überdies sind die Polymere verarbeitbar, so daß ein Ersatz von umweltbelastendem PVC durch erfindungsgemäße Polymere möglich ist.

**Tabelle 1: Zusammensetzungen**

| **Beispiel Nr.** | | **1** | **2** | **3** | **4** | **5** | **6** | **7** | **8** | **9** | **10** | **11** | **12** | **13** | **14** | **V1** | **V2** | **V3** | **V4** |
|---|---|---|---|---|---|---|---|---|---|---|---|---|---|---|---|---|---|---|---|
| **Komponente** | | | | | | | | | | | | | | | | | | | |
| **A** | FR CROS 489 | 19 | 19 | 15,2 | 15,2 | | | | | | | | 19 | 19 | | | | | |
| **A** | FR CROS C 40 | | | | | 19 | 19 | 19 | 19 | 19 | 19 | | | | 19 | 20 | 19 | 19 | 19 |
| **A** | FR CROS 484 | | | | | | | | | | | 19 | | | | | | | |
| **B** | Triazinverbindung | 4 | 4 | 3,2 | 3,2 | 4 | 4 | 4 | 4 | 4 | 4 | 4 | 4 | 4 | 4 | 5 | 4 | 4 | 4 |
| **C** | Zinkpyrophosphat | | | | | 1 | 1 | 1 | 1 | 1 | 1 | 2 | | | 2 | | | | |
| **C** | Zinkborat | 2 | 2 | 1 | 1 | | | | | | | | | | | | | | |
| **C** | Aluminiumphosphat | | | | | | | | | | 1 | | 1 | 1 | | | | | |
| **D** | Melamincyanurat | | | 0,6 | | 1 | | | | | | | 1 | | | | 2 | | |
| **D** | Melem | | | | | | 1 | | | | | | | | | | | 2 | |
| **D** | Melon | | | | | | | 1 | | | | | | | | | | | 2 |
| **D** | Melaminpolyphosphat | | | | 0,6 | | | | 1 | | | | | | | | | | |
| **Zusatz** | Magnesiumhydroxid | | | | | | | | | 1 | | | | | | | | | |
| **Kunststoff** | HDPE | 75 | | | | | | | | | | | | | 75 | | | | |
| **Kunststoff** | PP | | 75 | 80 | 80 | 75 | 75 | 75 | 75 | 75 | 75 | 75 | 75 | 75 | | 75 | 75 | 75 | 75 |

**Tabelle 2: Ergebnisse von Flammschutztests**

| **Beispiel Nr.** | | **1** | **2** | **3** | **4** | **5** | **6** | **7** | **8** | **9** | **10** | **11** | **12** | **13** | **14** | **V1** | **V2** | **V3** | **V4** |
|---|---|---|---|---|---|---|---|---|---|---|---|---|---|---|---|---|---|---|---|
| **Test** | **Schichtdicke** | | | | | | | | | | | | | | | | | | |
| **TBT** | 1,6 mm | 9 | 5 | 17 | 13 | 12 | 11 | 10 | 13 | 13 | 17 | 7 | 12 | 13 | | 25 | 23 | 20 | 19 |
| **UL 94** | 1,6 mm | V0 | V0 | V0 | V0 | V0 | V0 | V0 | V0 | V0 | V0 | V0 | V0 | V0 | V0 | V0 | V0 | V0 | V0 |
| **TBT** | 0,8mm | 25 | 17 | >50 | >50 | 17 | 15 | 17 | 18 | 15 | 20 | 8 | >50 | >50 | 9 | >50 | >50 | >50 | >50 |
| **UL 94** | 0,8 mm | V0 | V0 | V2 | V2 | V0 | V0 | V0 | V0 | V0 | V0 | V0 | V2 | V2 | V0 | V2 | V2 | V2 | V2 |
| **LOI** | 1,25 mm | 31 | 33 | 33 | 34 | 37 | 37 | 37 | 31 | 34 | 33 | 28 | 31 | 32 | 35 | 32 | 30 | 28 | 29 |

**Tabelle 3: Gewichtsverlust des Flammschutzmittels (ohne Kunststoff) von 2%**

| **Beispiel Nr.** | **1** | **2** | **3** | **4** | **5** | **6** | **7** | **8** | **9** | **10** | **11** | **12** | **13** | **14** | **V1** | **V2** | **V3** | **V4** |
|---|---|---|---|---|---|---|---|---|---|---|---|---|---|---|---|---|---|---|
| **Temperatur in °C** | 312 | 312 | 309 | 308 | 322 | 322 | 317 | 326 | 310 | 290 | 286 | 313 | 329 | 314 | 319 | 325 | 330 | 319 |

## Patentansprüche

1. Halogenfreies Flammschutzmittel für die Einbettung in eine Polymermatrix, wobei das Flammschutzmittel wenigstens die folgenden Komponenten A, B und C und optional die Komponente D enthält:
A: Ammoniumpolyphosphat(e) und/oder Derivate davon,
B: oligomeres oder polymeres 1,3,5-Triazinderivat oder Gemische von mehreren davon der allgemeinen Formel 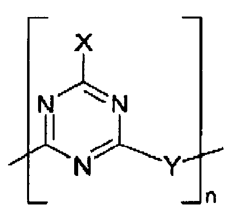 wobei
X ein Morpholino-Rest, ein Piperidino-Rest oder eine von Piperazin abgeleitete Gruppe ist,
Y eine zweiwertige, von Piperazin abgeleitete Gruppe ist und
n eine ganze Zahl größer als 1 ist,
C: Verbindungen, ausgewählt unter Monozinkphosphat, Zinkborat, Trizinkphosphat, Zinkpyrophosphat, Zinkpolyphosphat, Zinkhydroxystannat, Zinkstannat, Borphosphat, Monoaluminiumphosphat, Trialuminiumphosphat, Aluminiummetaphosphat und Gemischen davon,
D: vorkondensierte Melaminderivate, Melaminsalze und -addukte, Ethylendiaminphosphat, Piperazinphosphat, Piperazinpolyphosphat, 1,3,5-Trihydroxyethylisocyanurat, 1,3,5-Triglycidylisocyanurat, Triallylisocyanurat,
wobei das Gewichtsverhältnis der Komponente A zu der Komponente B von 10:1 bis 1:1 beträgt und die Komponenten A und B zusammen 60 bis 99 Gew.-% und die Komponenten C und D zusammen 1 bis 40 Gew.-% des Gesamtgewichts der Komponenten A, B, C und D ausmachen.

2. Halogenfreies Flammschutzmittel nach Anspruch 1, **dadurch gekennzeichnet, daß** Komponente A beschichtete(s) Ammoniumpolyphosphat(e) und/oder Derivate davon ist oder umfaßt.

3. Halogenfreies Flammschutzmittel nach einem der vorangegangenen Ansprüche, **dadurch gekennzeichnet, daß** Komponente A beschichtetes und/oder unbeschichtetes Ammoniumpolyphosphat der Kristallform II ist oder umfaßt.

4. Halogenfreies Flammschutzmittel nach einem der vorangegangenen Ansprüche, **dadurch gekennzeichnet, daß** die Ammoniumpolyphosphate und/oder Derivate davon gemäß Komponente A mit Melamin, Melaminharz, Melaminderivaten, Silanen, Siloxanen oder Polystyrolen beschichtete Partikel und/oder mit Melamin, Melaminharz, Melaminderivaten, Silanen, Siloxanen oder Polystyrolen beschichtete und vernetzte Partikel sind.

5. Halogenfreies Flammschutzmittel nach einem der Ansprüche 1 bis 4, **dadurch gekennzeichnet, daß** der Anteil der Beschichtung der Ammoniumpolyphosphate und/oder Derivate davon gemäß Komponente A 0,1 bis 20 Gew.-%, bevorzugt 1 bis 10 Gew.-%, bezogen auf das Gesamtgewicht der beschichteten Ammoniumpolyphosphate und/oder Derivate davon, beträgt.

6. Halogenfreies Flammschutzmittel nach einem der Ansprüche 1 bis 5, **dadurch gekennzeichnet, daß** die beschichteten Ammoniumpolyphosphate und/oder Derivate davon gemäß Komponente A einschließlich Beschichtung eine mittlere Teilchengröße D50 von 5 bis 30 µm, vorzugsweise 5 bis 20 µm aufweisen.

7. Halogenfreies Flammschutzmittel nach einem der vorangegangenen Ansprüche, **dadurch gekennzeichnet, daß** in Komponente B n eine ganze Zahl von 2 bis 50 ist.

8. Halogenfreies Flammschutzmittel nach einem der vorangegangenen Ansprüche, **dadurch gekennzeichnet, daß** das 1,3,5-Triazinderivat gemäß Komponente B unter Oligomeren und Polymeren von 2-Piperazinylen-4-morpholino-1,3,5-triazin und 2-Piperazinylen-4-piperidino-1,3,5-triazin und Kombinationen der vorgenannten Verbindungen ausgewählt ist.

9. Halogenfreies Flammschutzmittel nach einem der vorangegangenen Ansprüche, **dadurch gekennzeichnet, daß** die Komponente D unter Melem, Melon, Melam, Melamincyanurat, Melaminborat, Melaminorthophosphat, Melaminpyrophosphat, Dimelaminpyrophosphat und Melaminpolyphosphat ausgewählt ist.

10. Halogenfreies Flammschutzmittel nach einem der vorangegangenen Ansprüche, **dadurch gekennzeichnet, daß** die Komponente B einen Chlorgehalt von < 1 Gew.-%, vorzugsweise < 0,8 Gew.-% aufweist.

11. Halogenfreies Flammschutzmittel nach einem der vorangegangenen Ansprüche, **dadurch gekennzeichnet, daß** es weiterhin Dispergierhilfsmittel in einer Menge von 0,01 bis 10 Gew.-%, vorzugsweise in einer Menge von 0,1 bis 5, 0 Gew.-% enthält, wobei die Dispergierhilfsmittel vorzugsweise unter Fettsäureamiden, einschließlich Fettsäuremonoamiden, Fettsäurebisamiden und Fettsäurealkanolamiden, wie Oleamiden und Erucamiden, unter Fettsäureestern, einschließlich Glycerolestern und Waxestern, unter C16- bis C18-Fettsäuren, unter Fettsäurealkoholen, einschließlich Cetyl- und Stearyl-Fettsäurealkoholen, unter natürlichen und synthetischen Waxen, Polyethylenwaxen und oxidierten Polyethylenwaxen und unter Metallstearaten, vorzugsweise Ca-, Zn-, Mg-, Ba-, Al-, Cd- und Pb-Stearaten,.ausgewählt sind.

12. Halogenfreies Flammschutzmittel nach einem der vorangegangenen Ansprüche, **dadurch gekennzeichnet, daß** es einen Gehalt an freiem Wasser (Feuchtegehalt) von < 0,6 Gew.-%, vorzugsweise < 0,4 Gew.-% aufweist.

13. Polymermaterial, insbesondere thermoplastisches Elastomer (TPE), welches das Flammschutzmittel nach einem der vorangegangenen Ansprüche in einer Menge von 5 bis 60 Gew.-%, vorzugsweise in einer Menge von 10 bis 40 Gew.-% enthält.

14. Polymermaterial, insbesondere thermoplastisches Elastomer (TPO), nach Anspruch 10, **dadurch gekennzeichnet, daß** das Polymerniaterial ausgewählt ist unter gefüllten und ungefüllten Polyolefinen, Vinyl-Polymeren, Olefin-Copolymeren, thermoplastischen Elastomeren auf Olefinbasis (TPO), vernetzten thermoplastischen Elastomeren auf Olefinbasis, Urethanen (TPU), Polyestern und Copolyestern (TPC), Styrol-Blockcopolymeren (TPS), Polyamiden und Copolyamiden (TPA).

15. Polymermaterial nach einem der Ansprüche 10 oder 11, **dadurch gekennzeichnet, daß** das Polymermaterial ein thermoplastisches Elastomer ist, welches unter Styrol-Blockcopolymeren (TPS), vorzugsweise unter den Styrol-Blockcopolymeren SBS (Styrol-Butadien-Styrol), SEBS (Styrol-Ethenbuten-Styrol), SEPS (Styrol-Ethenpropen-Styrol), SEEPS (Styrol-Ethen-Ethenpropen-Styrol)und MBS (Methacrylat-Butadien-Styrol) ausgewählt ist.

16. Polymermaterial, insbesondere thermoplastisches Elastomer, nach einem der Ansprüche 10 oder 12, **dadurch gekennzeichnet, daß** das Polymermaterial Füllstoffe enthält, die vorzugsweise unter Calciumcarbonat, Silicat, Talk, Ton, Glimmer, Kieselerde, Calciumsulfat, Bariumsulfat, Aluminiumhydroxid, Glasfasern und -kugeln, Holzmehl, Cellulose-Pulver, Ruß und Graphit ausgewählt sind.

## Claims

1. Halogen-free flame retardant for incorporation into a polymer matrix, wherein the flame retardant contains at least the following components A, B and C and optionally the component D:
A: ammonium polyphosphate(s) and/or derivatives thereof,
B: an oligomeric or polymeric 1,3,5-triazine derivative or mixtures of several thereof of the general formula 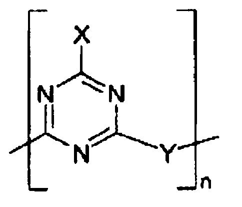 wherein
X is a morpholino residue, a piperidino residue or a group derived from piperazine,
Y is a divalent group derived from piperazine and
n is a whole number greater than 1,
C: compounds selected from monozinc phosphate, zinc borate, trizinc phosphate, zinc pyrophosphate, zinc polyphosphate, zinc hydroxystannate, zinc stannate, boron phosphate, monoaluminium phosphate, trialuminium phosphate, aluminium metaphosphate and mixtures thereof,
D: precondensed melamine derivatives, melamine salts and adducts, ethylenediamine phosphate, piperazine phosphate, piperazine polyphosphate, 1,3,5-trihydroxyethyl isocyanurate, 1,3,5-triglycidyl isocyanurate and triallyl isocyanurate,
wherein the weight ratio of the component A to the component B is from 10:1 1 to 1:1 and the components A and B together make up 60 to 99 wt. % and the components C and D together make up 1 to 40 wt. % of the total weight of the components A, B, C and D.

2. Halogen-free flame retardant according to Claim 1, **characterised in that** component A is or includes coated ammonium polyphosphate(s) and/or derivatives thereof.

3. Halogen-free flame retardant according to one of the previous claims, **characterised in that** component A is or includes coated and/or uncoated ammonium polyphosphate of the crystal form II.

4. Halogen-free flame retardant according to one of the previous claims, **characterised in that** the ammonium polyphosphates and/or derivatives thereof as in component A are particles coated with melamine, melamine resin, melamine derivatives, silanes, siloxanes and/or polystyrenes and/or particles coated with melamine, melamine resin, melamine derivatives, silanes, siloxanes or polystyrenes and crosslinked.

5. Halogen-free flame retardant according to one of Claims 1 to 4, **characterised in that** the proportion of the coating of the ammonium polyphosphates and/or of the derivatives thereof as in component A is 0.1 to 20 wt. %, preferably 1 to 10 wt. %, based on the total weight of the coated ammonium polyphosphates and/or of the derivatives thereof.

6. Halogen-free flame retardant according to one of Claims 1 to 5, **characterised in that** the coated ammonium polyphosphates and/or derivatives thereof as in component A including coating have an average particle size D50 from 5 to 30 µm, preferably 5 to 20 µm.

7. Halogen-free flame retardant according to one of the previous claims, **characterised in that** in Component B n is a whole number from 2 to 50.

8. Halogen-free flame retardant according to one of the previous claims, **characterised in that** the 1,3,5-triazine derivative as in component B is selected from oligomers and polymers of 2-piperazinylene-4-morpholino-1,3,5-triazine and 2-piperazinylene-4-piperidino-1,3,5-triazine and combinations of the aforesaid compounds.

9. Halogen-free flame retardant according to one of the previous claims, **characterised in that** the component D is selected from melem, melon, melam, melamine cyanurate, melamine borate, melamine orthophosphate, melamine pyrophosphate, dimelamine pyrophosphate and melamine polyphosphate.

10. Halogen-free flame retardant according to one of the previous claims, **characterised in that** the component B has a chlorine content of < 1 wt. %, preferably < 0.8 wt. %.

11. Halogen-free flame retardant according to one of the previous claims, **characterised in that** it further contains dispersion aids in a quantity of 0.01 to 10 wt. %, preferably in a quantity of 0.1 to 5.0 wt. %, the dispersion aid preferably being selected from fatty acid amides, including fatty acid monoamides, fatty acid bisamides, and fatty acid alkanolamides such as oleamides and erucamides, from fatty acid esters, including glycerine esters and wax esters, from C16 to C 18 fatty acids, from fatty acid alcohols, including cetyl and stearyl fatty acid alcohols, from natural and synthetic waxes, polyethylene waxes and oxidised polyethylene waxes and from metal stearates, preferably Ca, Zn, Mg, Ba, Al, Cd and Pb stearates.

12. Halogen-free flame retardant according to one of the previous claims, **characterised in that** it has a free water content (moisture content) of < 0.6 wt. %, preferably < 0.4 wt. %.

13. Polymeric material, in particular thermoplastic elastomer (TPE), which contains the flame retardant according to one of the previous claims in a quantity of 5 to 60 wt. %, preferably in a quantity of 10 to 40 wt. %.

14. Polymeric material, in particular thermoplastic elastomer (TPO), according to Claim 10, **characterised in that** the polymeric material is selected from filled and unfilled polyolefins, vinyl polymers, olefin copolymers, olefin-based thermoplastic elastomers (TPO), crosslinked olefin-based thermoplastic elastomers, urethanes (TPU), polyesters and co-polyesters (TPC), styrene block copolymers (TPS), polyamides and co-polyamides (TPA).

15. Polymeric material according to one of Claims 10 or 11, **characterised in that** the polymeric material is a thermoplastic elastomer which is selected from styrene block copolymers (TPS), preferably from the styrene block copolymers SBS (styrenebutadiene-styrene), SEBS (styrene-ethene-butene-styrene), SEPS (styrene-ethene-propene-styrene), SEEPS (styrene-ethene-ethene-propene-styrene) and MBS (methacrylate-butadiene-styrene).

16. Polymeric material, in particular thermoplastic elastomer, according to one of Claims 10 or 12, **characterised in that** the polymeric material contains fillers, which are preferably selected from calcium carbonate, silicate, talc, clay, mica, silica, calcium sulphate, barium sulphate, aluminium hydroxide, glass fibres and glass beads, wood flour, cellulose powder, soot and graphite.

## Revendications

1. Agent anti-flamme sans halogène destiné à être incorporé dans une matrice polymère, l'agent anti-flamme contenant au moins les composants suivants A, B et C et en option le composant D :
A : du ou des polyphosphates d'ammonium et/ou des dérivés de ceux-ci ;
B : un dérivé polymère ou oligomère de la 1,3,5-triazine ou des mélanges de plusieurs de ces dérivés ayant la formule générale 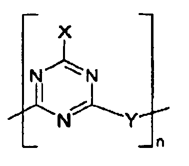 où
X est un résidu morpholino, un résidu pipérino ou un groupe dérivé de la pipérazine,
Y est un groupe bivalent dérivé de la pipérazine et
n est un nombre entier supérieur à 1,
C : des composés choisi parmi le monophosphate de zinc, le borate de zinc, le triphosphate de zinc, le pyrophosphate de zinc, le polyphosphate de zinc, l'hydroxystannate de zinc, le stannate de zinc, le phosphate de bore, le monophosphate d'aluminium, le triphosphate d'aluminium, le métaphosphate d'aluminium et des mélanges de ceux-ci,
D : les dérivés précondensés de la mélanine, les sels et produits d'addition de la mélanine, le phosphate d'éthylène-diamine, le phosphate de pipérazine, le polyphosphate de pipérazine, le 1,3,5-trihydroxyéthylisocyanurate, le 1,3,5-triglycidylisocyanurate, le triallylisocyanurate,
le rapport en poids du composant A sur le composant B étant de 10:1 à 1:1, le pourcentage en poids des composants A et B ensemble étant de 60 à 99% et le pourcentage en poids des composants C et D ensemble étant de 1 à 40% du pois total des composants A, B, C et D.

2. Agent anti-flamme sans halogène selon la revendication 1, **caractérisé en ce que** le composant A est ou comporte un ou des polyphosphates d'ammonium enduits et/ou des dérivés de ceux-ci.

3. Agent anti-flamme sans halogène selon l'une des revendications précédentes, **caractérisé en ce que** le composant A est ou comporte un polyphosphate d'ammonium enduit et/ou non enduit de la forme cristalline II.

4. Agent anti-flamme sans halogène selon l'une des revendications précédentes, **caractérisé en ce que**, pour le composant A, les polyphosphates d'ammonium et/ou des dérivés de ceux-ci sont des particules enduites de mélamine, de résine de mélamine, de dérivés de la mélamine, de silanes, de siloxanes ou de polystyrols et/ou des particules réticulées enduites de mélamine, de résine de mélamine, de dérivés de la mélamine, de silanes, de siloxanes ou de polystyrols.

5. Agent anti-flamme sans halogène selon l'une des revendications 1 à 4, **caractérisé en ce que**, pour le composant A, la portion de l'enduit de polyphosphates d'ammonium et/ou de dérivés de ceux-ci constitue 0,1 à 20% en poids, de préférence 1 à 10% en poids du poids total de polyphosphates d'ammonium enduits et/ou de dérivés de ceux-ci.

6. Agent anti-flamme sans halogène selon l'une des revendications 1 à 5, **caractérisé en ce que**, pour le composant A, les polyphosphates d'ammonium enduits ou les dérivés de ceux-ci, l'enduit inclus, ont une taille de particule D50 de 5 à 30 µm, avantageusement de 5 à 20 µm.

7. Agent anti-flamme sans halogène selon l'une des revendications précédentes, **caractérisé en ce que**, pour le composant B, n est un nombre entier de 2 à 50.

8. Agent anti-flamme sans halogène selon l'une des revendications précédentes, **caractérisé en ce que**, pour le composant B, le dérivé de la 1,3,5-triazine est choisi parmi les oligomères et les polymères de la 2-pipérazinylène-4-morpholino-1,3,5-triazine et de la 2-pipérazinylène-4-pipéridino-1,3,5-triazine et des combinaisons des composés susmentionnés.

9. Agent anti-flamme sans halogène selon l'une des revendications précédentes, **caractérisé en ce que** le composant D est choisi parmi le melem, le melon, le melam, le cyanurate de mélamine, le borate de mélamine, l'orthophosphate de mélamine, de pyrophosphate de mélamine, le pyrophosphate de dimélamine et le polyphosphate de mélamine.

10. Agent anti-flamme sans halogène selon l'une des revendications précédentes, **caractérisé en ce que** le composant B a une teneur en chlore inférieure à 1% en poids, avantageusement inférieure à 0,8% en poids.

11. Agent anti-flamme sans halogène selon l'une des revendications précédentes, **caractérisé en ce qu'**il contient en outre des agents dispersants dans une quantité de 0,01 à 10% en poids, avantageusement dans une quantité de 0,1 à 5,0% en poids, les agents dispersants étant avantageusement choisis parmi les amides d'acides gras, y compris les monoamides d'acides gras, les bisamides d'acides gras et les alcanolamides d'acides gras, tels que les oléamides, et les érucamides, parmi les esters d'acides gras, y compris es esters de glycérol et les esters de cires, parmi les acides gras C16 à C18, parmi les alcools gras, y compris les alcools cétylique et stéarylique, parmi les cires naturelles et de synthèse, les cires de polyéthylène et les cires de polyéthylène oxydées et parmi les stéarates métalliques, avantageusement les stéarates de Ca, de Zn, de Mg, de Ba, d'Al de Cd et de Pb.

12. Agent anti-flamme sans halogène selon l'une des revendications précédentes, **caractérisé en ce qu'**il a une teneur en eau libre (teneur en humidité) inférieure à 0,6% en poids, avantageusement inférieure à 0,4% en poids.

13. Matériau polymère, notamment élastomère thermoplastique (TPE), lequel contient l'agent anti-flamme selon l'une des revendications précédentes dans une quantité de 5 à 60%, avantageusement dans une quantité de 10 à 40% en poids.

14. Matériau polymère, notamment élastomère thermoplastique (TPO), selon la revendication 10, **caractérisé en ce que** le matériau polymère est choisi parmi les polyoléfines chargées et non chargées, les polymères vinyliques, les copolymères d'oléfines, les élastomères thermoplastiques à base d'oléfines (TPO), les élastomères thermoplastiques réticulés à base d'oléfines, les uréthanes (TPU), les polyesters et les copolyesters (TPC), les polymères en masse de styrol (TPS), les polyamides et les copolyamides (TPA).

15. Matériau polymère selon l'une des revendications 10 ou 11, **caractérisé en ce que** le matériau polymère est un élastomère thermoplastique qui est choisi parmi les copolymères en masse de styrol (TPS), avantageusement parmi les copolymères en masse de styrol SBS (styrol-butadiène-styrol), SEBS (styrol-éthylènebutène-styrol), SEPS (styrol-éthylènepropène-styrol), SEEP (styrol-éthylène-éthylènepropène-styrol) et MBS (méthacrylate-butadiène-styrol).

16. Matériau polymère, notamment un élastomère thermoplastique, selon l'une des revendications 10 ou 12, **caractérisé en ce que** le matériau polymère contient des charges qui sont avantageusement choisies parmi le carbonate de calcium, un silicate, la stéatite, l'argile, le mica, la silice, le sulfate de calcium, le sulfate de baryum, l'hydroxyde d'aluminium, les fibres et les billes de verre, la farine de bois, la poudre de cellulose, la suie et le graphite.
